# FASCICULE DE BREVET EUROPEEN

(11) **EP 2 166 189 B1**
(45) Date de publication et mention de la délivrance du brevet: **14.08.2013**
(21) Numéro de dépôt: 09170428.8
(22) Date de dépôt: 16.09.2009
(51) Int. Cl.: E06B 1/00

(54) **Bloc de façade comprenant un cadre de support d'un vitrage et destiné à être monté dans un bâtiment**
Fassadenblock, der einen Rahmen zur Befestigung einer Scheibe umfasst und zur Montage in einem Gebäude vorgesehen ist
Façade block comprising a support frame for a window, designed for installation in a building

(30) Priorité: 16.09.2008 FR 0805090
(43) Date de publication de la demande: 24.03.2010
(73) Titulaire: Somfy SAS, 74300 Cluses (FR)
(72) Inventeur: Cieslik, Franck, 38300 Succieu (FR)
(74) Mandataire: Bugnion Genève

(56) Documents cités:
- EP-A- 1 433 997
- EP-A- 1 674 648
- DE-U1- 20 114 054
- NL-C1- 1 007 017
- US-A- 5 226 724
- US-A- 5 532 560
- US-A1- 2003 085 674

## Description

L'invention se rapporte au domaine du bâtiment, et en particulier, du bâtiment dit intelligent, respectant des critères de construction stricts et fournissant une structure capable de gérer de manière automatique le confort des occupants ainsi que des règles d'économie d'énergie conformes aux objectifs écologiques actuels.

Ces bâtiments intelligents intègrent couramment des façades dites dynamiques, comprenant notamment des écrans de protection solaire mobiles et/ou orientables de manière automatisée, associés aux fenêtres. Ces écrans sont en effet pilotés par des moteurs, eux-mêmes commandés individuellement, dans leur ensemble et/ou par groupe par une ou plusieurs unités de gestion. Les façades dynamiques peuvent également comprendre des vitrages particuliers, par exemple des vitrages électrochromiques, laissant pénétrer plus ou moins de lumière extérieure dans le bâtiment en fonction de leur réglage. Le taux de transmission de lumière est alors réglable.

Une plus ou moins grande occultation de l'intérieur du bâtiment vis-à-vis de la lumière extérieure permet de réguler l'apport thermique à l'intérieur du bâtiment tout en prenant en compte le confort visuel. Ainsi, l'usage d'une climatisation ou d'un chauffage de l'intérieur du bâtiment est réduit, ainsi que l'utilisation de la lumière électrique au profit de la lumière naturelle. De nombreux documents sur ce sujet décrivent diverses méthodes de commande des équipements électriques cités ci-dessus, prenant comme données d'entrée les informations fournies par des capteurs divers (capteurs de température, d'ensoleillement, horloges, etc) ou directement par intervention des occupants du bâtiment.

Il s'avère généralement nécessaire de connecter ces équipements électriques à une alimentation externe par un réseau câblé. En effet, la majorité des équipements utilisés dans les bâtiments n'est pas autonome (disposant de sa propre source d'énergie). D'autre part, pour commander ces équipements, des informations doivent transiter depuis au moins une unité centrale de commande vers les équipements. Ce transfert d'information peut se faire par voie non filaire, mais il est courant dans les bâtiments tertiaires, d'utiliser des bus d'information, connectant les sources d'informations (capteurs, points de commande, unité centrale de gestion) aux différents équipements. Ainsi, dans un domaine proche de l'invention, le document US5532560 décrit une connexion classique de stores vénitiens raccordés sur une ligne bus à quatre fils. Chaque unité esclave de commande d'un store vénitien comprend une prise 50 unique de raccordement à la ligne bus. Le raccordement entre les différentes unités esclaves se fait vraisemblablement par l'intermédiaire de cette prise 50 et de la ligne bus. Une unité esclave ou maître peut être raccordée à un capteur et transmettre les données fournies par le capteur aux autres unités (elles-mêmes équipées ou non d'un capteur).

On connaît de la demande EP1674648 un bloc de façade comprenant un module pouvant intégrer plusieurs fonctions (unité de commande, alimentation par panneaux photovoltaïques). Ce module intégré à la fenêtre permet de gérer facilement les équipements électriques liés à la baie (par exemple les écrans de protection solaire, le chauffage). Ce module peut également comprendre un connecteur pour une liaison à un bus d'information. Le bloc comprend donc tous les éléments nécessaires à son propre fonctionnement, hormis son alimentation : une simple connexion au réseau électrique est alors nécessaire.

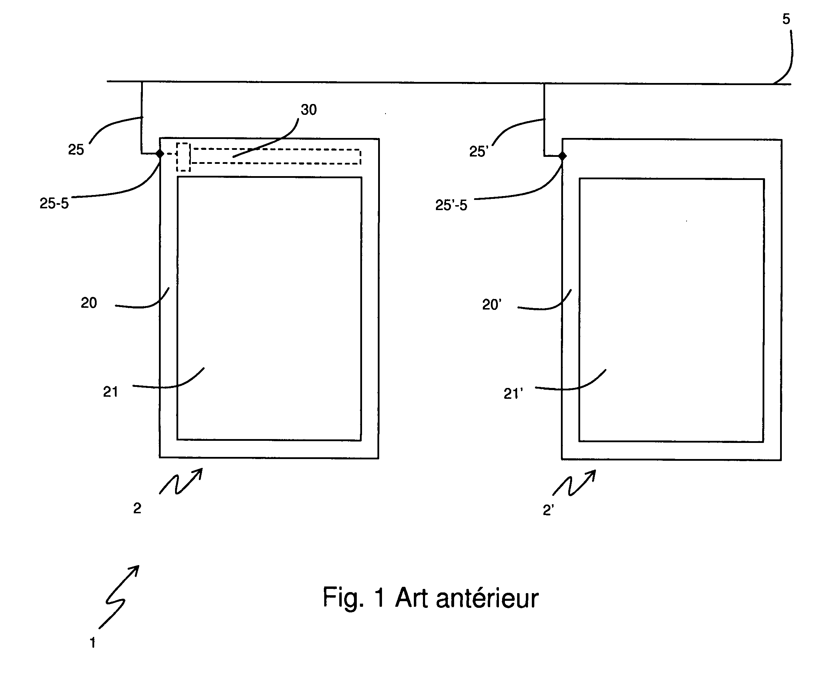

L'intégration d'un tel bloc de façade dans une façade de bâtiment suppose donc d'une part un raccordement au bus et un raccordement électrique au réseau. Cela suppose en général une intégration des différents câbles dans un faux-plafond de l'étage, et un raccordement individuel de chaque bloc de façade à ces câbles, ainsi que représenté schématiquement à la figure 1.

Sur cette figure 1, une installation 1 de façade est représentée de manière schématique. Elle comprend un premier bloc de façade 2, muni d'un cadre 20 entourant une fenêtre 21. Un deuxième bloc de façade équivalent 2' est représenté, les mêmes caractéristiques étant référencées avec le même signe de référence suivi d'un « ' ».

Chaque bloc de façade intègre dans son cadre au moins un équipement électrique tel qu'un store de protection solaire qui peut être déployé à l'avant ou à l'arrière de la fenêtre sous l'effet d'un actionneur électromécanique. Alternativement ou en complément, le vitrage peut posséder des propriétés électrochromiques, le cadre intégrant un module électronique de gestion de ce vitrage. Cet équipement électrique nécessite pour son fonctionnement, une liaison à une source alimentation. Dans le cas d'utilisation coordonnée de plusieurs blocs de façade, chaque équipement doit être relié également à une source d'information par un médium de transmission de données, en particulier à un bus d'information.

Un câble d'alimentation et de bus d'information 5, installé dans un faux-plafond, court au-dessus des deux blocs de façade. Chacun des blocs de façade est alors relié au travers d'un point de connexion, 25-5, 25'-5, par un câble de liaison 25, 25' au câble 5.

Chaque bloc de façade est monté dans un châssis de la façade, et les connexions appropriées sont alors effectuées.

Par ailleurs, il est connu, notamment du document US6686712 de connecter différents moteurs en cascade de manière à réduire la longueur des câbles nécessaires et à permettre le remplacement simple d'un moteur ou d'un inverseur le pilotant sans affecter le système entier tel que ce serait le cas avec des moteurs possédant chacun sa connexion individuelle à l'alimentation. Ce brevet porte sur les systèmes dans lesquels les moteurs sont éloignés les uns des autres et de la source d'alimentation. Il vise à prévenir les conséquences néfastes, sur les moteurs en état de fonctionner, que pourrait avoir une intervention sur un moteur défectueux.

Dans le cadre de l'invention, la problématique est toute autre. Les équipements électriques sont indépendants les uns des autres, ne fonctionnent que lors de cycles très courts et ont rarement besoin d'être remplacés. En revanche, leur intégration dans un bloc de façade, et l'intégration de ces derniers dans le bâtiment pour la création d'une façade doit être simple, rapide et pratique.

En pratique, l'installation de tels blocs de façade doit faire intervenir plusieurs corps de métier du bâtiment : les électriciens et les ouvriers ou techniciens du bâtiment. Réunir deux corps de métier au même moment s'avère toujours délicat, la préparation du chantier par les uns pour les interventions des autres nécessite parfois une double intervention coûteuse.

L'invention vise donc à offrir un produit du bâtiment complexe, mais sous une forme prête à l'emploi et d'intégration très simple sur le chantier. On connaît aussi des documents EP1433997, EP1830121 et US5226724, dans le domaine des luminaires, des montages en cascades de plusieurs dispositifs d'éclairage. La présente invention se distingue de ces réalisations en ce qu'elle combine une fenêtre ayant sa fonction propre, avec un équipement électrique indépendant.

Le but de l'invention est de fournir un bloc de façade remédiant aux problèmes évoqués précédemment et améliorant les blocs de façade connus de l'art antérieur. En particulier, l'invention propose un bloc de façade ayant une structure simple et dont l'assemblage est pratique et rapide.

Le bloc de façade selon l'invention comprend un cadre de support d'un vitrage dans lequel est intégré le vitrage et au moins un équipement électrique, l'équipement électrique étant destiné à être relié à un câble d'alimentation. Il est **caractérisé en ce qu**'il comprend une unité de connexion électrique comprenant un câble électrique de liaison ayant deux extrémités et un connecteur à chaque extrémité du câble de liaison et en ce qu'il comprend un moyen de guidage du câble de liaison le long d'un bord du cadre.

Le moyen de guidage peut comprendre un passage guidant le câble de liaison sur au moins sensiblement l'intégralité de la largeur du bloc de façade.

Les connecteurs de l'unité de connexion électrique peuvent être fixés de part et d'autre du moyen de guidage.

Le câble de liaison peut comprendre des conducteurs d'alimentation et de transmission de signaux d'information.

L'unité de connexion électrique peut être reliée à l'équipement électrique via un câble d'équipement.

Le bloc de façade peut comprendre un boîtier de communication et/ou d'alimentation de l'unité de connexion, le boîtier comprenant un moyen d'interface avec le câble électrique de l'unité de connexion.

Le boîtier peut comprendre un récepteur d'ordres sans fil, en particulier un récepteur d'ordres radio.

Le boîtier peut comprendre un bloc d'alimentation comprenant un moyen de liaison à un réseau d'alimentation.

Le bloc de façade peut comprendre un logement dans le cadre pour le boîtier.

Le bloc de façade peut comprendre un point de commande intégré au cadre et relié à l'équipement électrique.

Le bloc de façade peut comprendre à chaque extrémité du câble électrique :
- un connecteur de premier type permettant une connexion entre unités de connexion de blocs de façade adjacents et une connexion entre le câble électrique et le câble d'équipement, ou,
- un connecteur de deuxième type permettant une connexion entre unités de connexion de blocs de façade adjacents uniquement.

L'installation selon l'invention comprend plusieurs blocs de façade définis précédemment, installés dans un bâtiment de plusieurs étages. Elle est caractérisée en ce qu'elle comprend une liaison par bus numérique formée par l'assemblage des unités de connexion de différents blocs de façade définis précédemment, installés à un même étage, et une liaison selon un protocole TCP/IP entre les ensembles de blocs de façade installés à des étages différents.

Selon l'invention, le procédé d'installation de deux blocs de façade définis précédemment est **caractérisé en ce qu**'il comprend les étapes suivantes :
- connexion de l'unité de connexion d'un premier bloc de façade à une source d'alimentation externe et à une unité de commande,
- connexion de l'unité de connexion du premier bloc de façade à l'unité de connexion d'un deuxième bloc de façade.

Le procédé d'installation peut comprendre une étape de réglage préalable des blocs de façade en usine.

Le procédé d'installation peut comprendre une étape de repérage commun des caractéristiques de l'équipement électrique d'un bloc de façade et des caractéristiques de ce bloc de façade.

L'invention sera mieux comprise à la lecture de la description qui va suivre, donnée uniquement à titre d'exemple et faite en se référant aux dessins annexés sur lesquels :
- la figure 1 est une représentation schématique de deux blocs de façade connus de l'art antérieur ;
- la figure 2 est une représentation schématique d'un premier mode de réalisation d'un bloc de façade selon l'invention ;
- la figure 3 est une représentation schématique d'un second mode de réalisation d'un bloc de façade selon l'invention ;
- la figure 4 est une représentation schématique d'un détail de réalisation d'un bloc de façade selon l'invention.

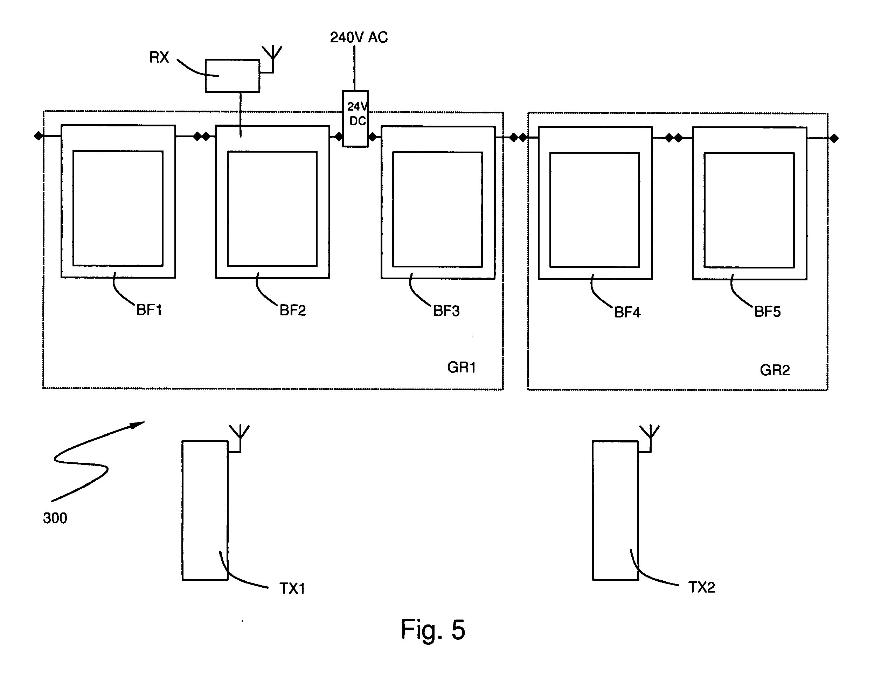

- la figure 5 est une représentation schématique d'une installation comprenant différents blocs de façade selon l'invention.

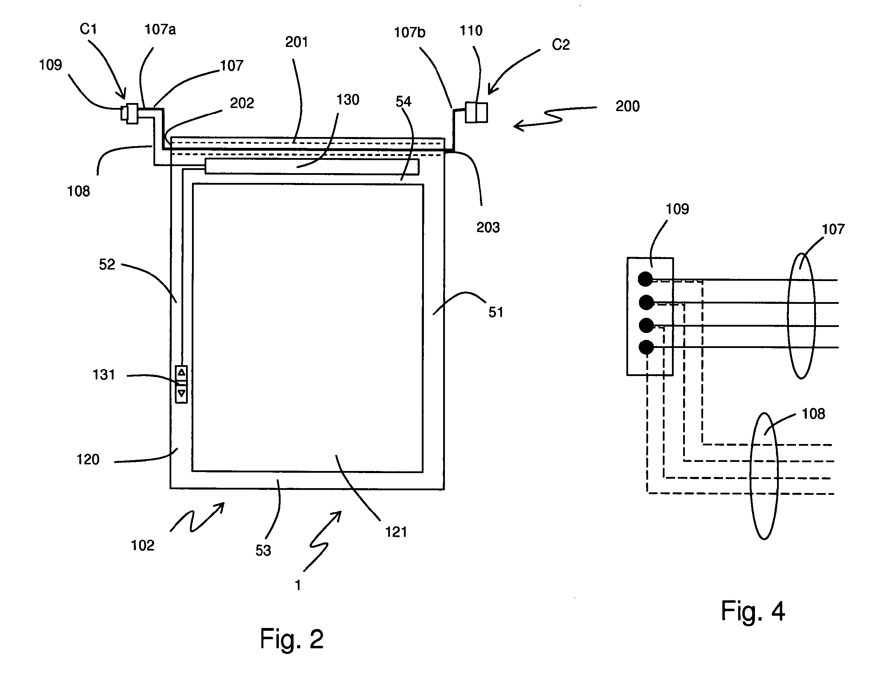

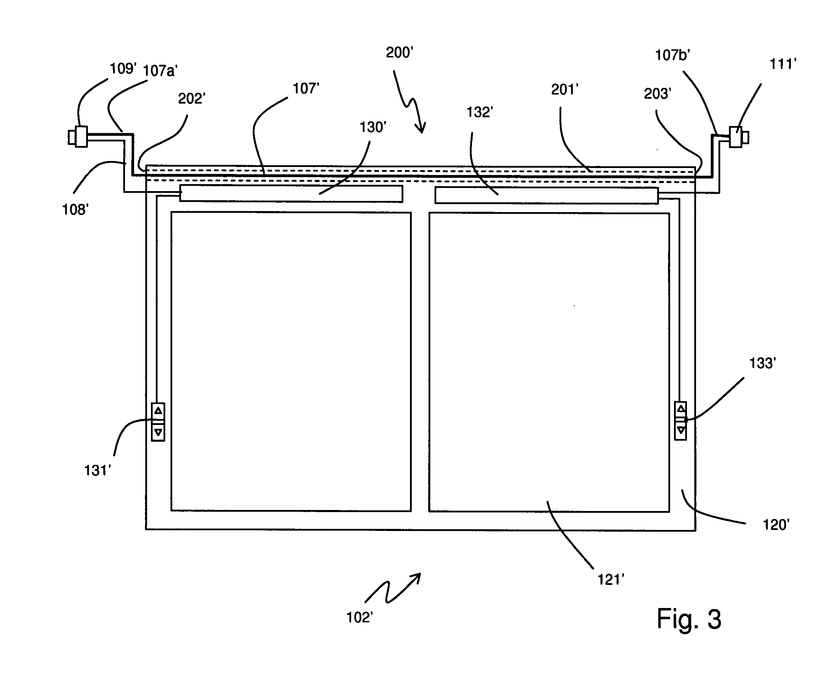

Contrairement aux blocs de façade de la figure 1, deux modes de réalisations de blocs de façade selon l'invention se présentent sous une forme telle que représentée aux figures 2 et 3. Un premier bloc de façade 102 comprend un cadre 120 entourant un vitrage 121. Le cadre comprend par exemple quatre bords : un bord latéral droit 51, un bord latéral gauche 52, un bord transversal inférieur 53 rejoignant les deux bords latéraux et un bord transversal supérieur 54 rejoignant les deux bords latéraux. Le bloc de façade selon l'invention intègre dans son cadre un équipement électrique tel qu'un dispositif de fermeture, d'occultation ou de protection solaire, un dispositif de ventilation ou un dispositif électrochromatique de régulation du rayonnement solaire traversant le vitrage. Les dispositifs de fermeture, d'occultation ou de protection solaire et les dispositifs de ventilation comprennent des actionneurs. Un tel actionneur de type électromécanique tubulaire, représenté à la figure 2 sous la référence 130, permet par exemple de manoeuvrer un écran de protection solaire (non représenté). L'écran peut être un écran en toile s'enroulant sur un tube entraîné en rotation par l'actionneur ou un écran à lames orientables dont l'orientation et le déplacement vers le haut ou vers le bas sont pilotés par l'actionneur. L'actionneur peut être relié par liaison filaire à un point de commande 131 intégré dans le cadre du bloc de façade.

Un deuxième bloc de façade équivalent 102' est représenté en figure 3, les mêmes caractéristiques étant référencées avec le même signe de référence suivi d'un « ' ». Ce deuxième bloc de façade diffère du premier en ce qu'il comprend, en plus d'un premier actionneur 130', un deuxième actionneur électromécanique 132' piloté simultanément ou indépendamment du premier, notamment par l'intermédiaire d'une commande manuelle 133' dédiée, intégrée dans le cadre 120'.

L'intégration de la commande murale dans le cadre du bloc de façade permet de proposer une commande locale aux utilisateurs sans poser le problème de l'installation déportée d'une telle commande murale (pour laquelle il faudrait tirer des câbles, faire des tranchées dans les cloisons, etc.). Cette commande manuelle peut être doublée par une commande nomade, par exemple radio, comme expliqué plus loin.

Le ou les actionneurs peuvent être commandés par l'intermédiaire d'ordres provenant d'un bus d'information, par voie non filaire ou par une commande manuelle directement reliée à l'actionneur et intégrée dans le cadre du bloc de façade.

A cet effet, le bloc de façade comprend une unité de connexion 200 comprenant un premier câble électrique 107 dit câble de liaison, intégré dans le haut du cadre et un deuxième câble 108 (dit câble d'équipement) correspondant au câble de l'actionneur, c'est-à-dire relié à celui-ci. Un premier connecteur 109 monté à une première extrémité 107a du câble de liaison est également connecté à l'extrémité libre du câble d'équipement 108. Un deuxième connecteur 110 est monté à la deuxième extrémité 107b du câble de liaison.

Ces connecteurs 109 et 110 sont représentés découplés du cadre de fenêtre, mais ils peuvent tout à fait y être intégrés. Par exemple, les connecteurs sont fixés dans des ouvertures prévues dans le cadre. La fixation peut être faite par exemple par vis ou par clipsage.

Le cadre comprend un passage 201 prévu sur le cadre, par exemple une goulotte prévue sur le bord supérieur du cadre ou dans le cadre. Ce passage est un moyen de guidage du fil électrique 107, entre deux points 202, 203, d'un côté à l'autre du bloc de façade. Le passage peut être réalisé par les parois du cadre lui-même et deux perçages dans ces parois au niveau des points 202 et 203. De préférence, les deux points 202, 203 sont disposés sur les côtés latéraux du bloc de façade à la même hauteur comme représenté à la figure 2. Les deux points 202, 203 peuvent aussi être disposés en haut du bloc de façade, par exemple sur le bord supérieur de bloc de façade sensiblement aux extrémités du côté supérieur du bloc de façade. Le passage s'étend au moins sensiblement parallèlement au vitrage. Il s'étend au moins sensiblement sur toute la longueur du bloc de façade.

Le deuxième bloc de façade comprend de manière similaire un câble électrique107' de liaison intégré dans le haut du cadre et un câble 108' d'équipement relié à l'actionneur 130'. Un troisième connecteur 109' monté à une première extrémité 107a' du câble de liaison est également connecté à l'extrémité libre du câble d'équipement 108'. Ce troisième connecteur est similaire au premier connecteur 109 du premier bloc de façade.

Un quatrième connecteur 111' est monté à la deuxième extrémité 107b' du câble de liaison, également relié à l'extrémité libre d'un câble d'équipement 140' du deuxième actionneur 132'. Ce dernier connecteur est donc similaire aux premier et troisième connecteurs. Ces connecteurs sont dits de premier type (C1), tandis que le deuxième connecteur est dit de second type (C2). Chacun de ces connecteurs peut être de type mâle ou femelle, de manière à se connecter sans intermédiaire à un connecteur femelle ou mâle d'un bloc de façade adjacent.

Alternativement, un adaptateur de type USB peut être prévu au niveau d'un des connecteurs pour une connexion directe d'un premier bloc de façade à un PC de contrôle. Ainsi, aucune autre interface n'est à prévoir pour le contrôle de l'installation par le PC.

Chaque câble comprend les fils nécessaires à la transmission de l'énergie d'alimentation et à la transmission d'information, éventuellement de manière bidirectionnelle. L'énergie d'alimentation est fournie sous très basse tension de sécurité.

Ainsi que représenté à la figure 4, les conducteurs du câble d'équipement 108 sont branchés en parallèle sur les conducteurs du câble de liaison au niveau d'un connecteur de premier type.

Lors du montage de la façade, les blocs de façade sont montés sur un châssis destiné à les supporter. Il ne reste plus qu'à relier entre eux les différents connecteurs placés les uns à côté des autres et de relier le premier connecteur aux différentes sources d'alimentation et d'information. La ligne bus est donc construite au fur et à mesure du montage des blocs de façade.

Ainsi, une fois assemblés, les blocs de façades contribuent au transfert d'énergie et d'information vers les blocs de façades raccordés à la suite. Chaque actionneur est simplement alimenté et peut transmettre et recevoir des informations en provenance d'une source centrale ou de chaque autre actionneur connecté sur la même ligne, en puisant et/ou fournissant l'énergie et les informations nécessaires au travers des connecteurs. Par exemple, pour une alimentation en 24V des équipements de la façade, il est préférable de prévoir une connexion au réseau d'alimentation tous les 20 actionneurs environ, plus ou moins suivant la puissance requise par ces actionneurs. Un bloc d'alimentation est représenté en figure 4.

Une telle intégration facilite l'installation et la gestion de la façade sur le chantier. De manière traditionnelle, chaque bloc de façade est répertorié de manière très précise par rapport à un plan. Les détails de la nomenclature sont le plus souvent résumés sur un autocollant posé sur le vitrage et sont dupliqués sur un plan de bâtiment.

Dans la mesure où l'intégration des différents équipements électriques se fait au préalable en usine, les détails des caractéristiques concernant les actionneurs et les produits de protection solaire peuvent également être ajoutés à cette liste. Il n'est donc pas nécessaire aux installateurs de repérer de manière séparée ces équipements électriques de façade.

L'intégration de sections de la ligne bus dans chaque bloc façade permet également de connecter très facilement celui-ci à un outil lors des réglages en usine. Ainsi, un apprentissage des fins de course, des vitesses de déplacement ou d'autres paramètres de fonctionnement est possible de manière très simplifiée. Ce réglage en usine permet également de limiter le risque d'erreur (un seul technicien s'occupe du réglage de chaque bloc de façade en usine de manière systématique ; sur un chantier, les réglages sont faits par l'intermédiaire d'un ou plusieurs installateurs, parfois sur plusieurs jours, ce qui entraîne souvent des erreurs ou des oublis).

L'utilisation d'un outil en usine facilite également grandement le travail de réglage.

Par ailleurs, pour assurer une bonne tenue du produit de protection solaire dans les transports entre l'usine et le chantier, les protections solaires peuvent être placées dans une position particulière, dite de transport. Dans le cas de stores vénitiens à lames horizontales, cette position de transport est une position dans laquelle les lames sont tassées les unes sur les autres.

Comme évoqué plus haut, un récepteur sans fil par exemple de type radio ou infrarouge peut être intégré dans un des blocs de façade et permettre un lien entre un ou plusieurs actionneurs et une commande radio, via la ligne bus.

Une telle construction est représentée schématiquement en figure 4, le récepteur radio pouvant être intégré à un bloc de façade ou connecté de manière séparée.

La figure 4 montre une installation 300 comprenant un ensemble de blocs de façade (représentés à distance les uns des autres pour faciliter la compréhension générale), référencés BF1-BF5 dont un (BF2) est connecté à un récepteur radio RX. Le récepteur radio est connecté à la ligne bus pour son alimentation et la transmission et réception d'informations. Le récepteur comprend un module électronique permettant de former une interface entre le réseau de communication sans fil (radio) et le réseau câblé (bus digital).

Les blocs de façade sont regroupés en deux groupes GR1 et GR2. Le premier groupe comprend le bloc de façade BF2 raccordé au récepteur radio RX.

Chaque groupe peut être piloté via une télécommande TX1, respectivement TX2. Les deux télécommandes peuvent correspondre à deux canaux de transmission d'une même télécommande.

Le récepteur radio est capable de recevoir des ordres en provenance de chacune des deux télécommandes. En particulier pour la commande des équipements électriques du deuxième groupe de blocs de façade, le récepteur RX reçoit le signal en provenance de la télécommande TX2, et retransmet ce signal par l'intermédiaire de la ligne bus aux différents blocs de façade du groupe GR2 concerné.

Il est ainsi possible d'utiliser un seul récepteur radio pour une pluralité de différents blocs de façade dont les équipements sont pilotés séparément ou en groupe.

De manière équivalente ou complémentaire, il est possible de connecter et d'intégrer au bloc de façade un ou plusieurs capteurs, par exemple un capteur solaire.

L'utilisation d'un capteur par bloc façade peut être particulièrement intéressante : les informations des différents capteurs peuvent être centralisées et utilisées pour définir une stratégie de commande des différents actionneurs. Par exemple, la complémentarité de différents capteurs situés sur des blocs de façade de différentes orientations ou à différentes hauteurs permet de réaliser l'équivalent d'une fonction de « suntracking » c'est-à-dire de recherche de la direction des rayons solaires incidents relativement à la façade du bâtiment.

Comme indiqué précédemment, les connecteurs des blocs de façade peuvent être utilisés pour une liaison directe avec un bloc d'alimentation, permettant par exemple de convertir une alimentation réseau 240V AC en tension 24V DC. Le bloc d'alimentation, tout comme le récepteur radio, peut être inséré dans un logement prévu dans le cadre d'un bloc de façade. Pour des raisons de simplicité du schéma, ceux-ci sont représentés à l'extérieur des blocs de façade.

Le câblage des différents actionneurs et des blocs de façade se fait avantageusement en utilisant un bus numérique, par exemple de type RS485. Ainsi, sur un même étage, la connexion horizontale des différents blocs de façade utilise ce bus numérique. En revanche, d'un étage à un autre (ou connexion verticale), il est possible d'utiliser des liaisons utilisant un protocole de type TCP/IP. Un réseau TCP/IP sert donc de structure porteuse pour différents réseaux locaux.

Comme il ressort de la description qui précède, le bloc de façade selon l'invention présente un montage simplifié. En particulier, il permet de diminuer significativement les besoins de câblage dans les faux-plafonds et de diminuer les recours à des tranchées dans les cloisons pour installer les câblages nécessaires aux blocs de façade.

Par ailleurs, la combinaison entre un réseau câblé intégré au bloc de façade et un réseau sans fil qui ne nécessite également aucun ajout extérieur au bloc de façade apparaît être une solution particulièrement avantageuse pour résoudre les inconvénients cités ci-dessus.

## Revendications

1. Bloc de façade (102 ; 102') comprenant un cadre (121 ; 121') de support d'un vitrage (120 ; 120') dans lequel est intégré le vitrage et au moins un équipement électrique (130 ; 130', 132'), l'équipement électrique étant destiné à être relié à un câble d'alimentation, **caractérisé en ce qu'**il comprend une unité de connexion électrique (200 ; 200') comprenant un câble électrique de liaison (107 ; 107') ayant deux extrémités (107a, 107b ; 107a', 107b') et un connecteur (109, 110 ; 109', 111') à chaque extrémité du câble de liaison et **en ce qu'**il comprend un moyen (201 ; 201') de guidage du câble de liaison le long d'un bord du cadre.

2. Bloc de façade selon la revendication 1, **caractérisé en ce que** le moyen de guidage comprend un passage (201 ; 201') guidant le câble de liaison sur au moins sensiblement l'intégralité de la largeur du bloc de façade.

3. Bloc de façade selon la revendication 1 ou 2, **caractérisé en ce que** les connecteurs de l'unité de connexion électrique sont fixés de part et d'autre du moyen de guidage.

4. Bloc de façade selon l'une des revendications précédentes, **caractérisé en ce que** le câble de liaison comprend des conducteurs d'alimentation et de transmission de signaux d'information.

5. Bloc de façade selon l'une des revendications précédentes, **caractérisé en ce que** l'unité de connexion électrique est reliée à l'équipement électrique via un câble d'équipement (108 ; 108').

6. Bloc de façade selon l'une des revendications précédentes, **caractérisé en ce qu'**il comprend un boîtier de communication et/ou d'alimentation de l'unité de connexion, le boîtier comprenant un moyen d'interface avec le câble électrique de l'unité de connexion.

7. Bloc de façade selon la revendication précédente, **caractérisé en ce que** le boîtier comprend un récepteur d'ordres sans fil, en particulier un récepteur d'ordres radio.

8. Bloc de façade selon la revendication 6 ou 7, **caractérisé en ce que** le boîtier comprend un bloc d'alimentation comprenant un moyen de liaison à un réseau d'alimentation.

9. Bloc de façade selon l'une des revendications 6 à 8, **caractérisé en ce qu'**il comprend un logement dans le cadre pour le boîtier.

10. Bloc de façade selon l'une des revendications précédentes, **caractérisé en ce qu'**il comprend un point de commande (131 ; 131', 133') intégré au cadre et relié à l'équipement électrique.

11. Bloc de façade selon l'une des revendications précédentes, **caractérisé en ce qu'**il comprend à chaque extrémité du câble électrique :
- un connecteur (109, 109', 11') de premier type permettant une connexion entre unités de connexion de blocs de façade adjacents et une connexion entre le câble électrique (107 ; 107') et le câble d'équipement (108 ; 108'), ou,
- un connecteur (110) de deuxième type permettant une connexion entre unités de connexion de blocs de façade adjacents uniquement.

12. Installation (300) comprenant plusieurs blocs de façade (BF1-BF5) selon l'une des revendications précédentes, installés dans un bâtiment de plusieurs étages, **caractérisée en ce qu'**elle comprend une liaison par bus numérique formée par l'assemblage des unités de connexion de différents blocs de façade selon l'une des revendications précédentes, installés à un même étage, et une liaison selon un protocole TCP/IP entre les ensembles de blocs de façade installés à des étages différents.

13. Procédé d'installation de deux blocs de façade selon l'une des revendications 1 à 11, **caractérisé en ce qu'**il comprend les étapes suivantes :
- connexion de l'unité de connexion d'un premier bloc de façade à une source d'alimentation externe et à une unité de commande,
- connexion de l'unité de connexion du premier bloc de façade à l'unité de connexion d'un deuxième bloc de façade.

14. Procédé d'installation selon la revendication 13, **caractérisé en ce qu'**il comprend une étape de réglage préalable des blocs de façade en usine.

15. Procédé d'installation selon la revendication 13 ou 14, **caractérisé en ce qu'**il comprend une étape de repérage commun des caractéristiques de l'équipement électrique d'un bloc de façade et des caractéristiques de ce bloc de façade.

## Patentansprüche

1. Fassadenblock (102; 102'), der einen Rahmen (121; 121') zur Befestigung einer Scheibe (120; 120'), in den die Scheibe und mindestens eine elektrische Ausrüstung (130; 130', 132') integriert sind, umfasst, wobei die elektrische Ausrüstung dazu bestimmt ist, mit einem Versorgungskabel verbunden zu sein, **dadurch gekennzeichnet, dass** er eine elektrische Verbindungseinheit (200; 200') umfasst, die ein elektrisches Verbindungskabel (107; 107') mit zwei Enden (107a, 107b; 107a', 107b') und einen Verbinder (109, 110; 109', 111) an jedem Ende des Verbindungskabels umfasst und dadurch, dass er ein Führungsmittel (201; 201') des Verbindungskabels entlang eines Randes des Rahmes umfasst.

2. Fassadenblock nach Anspruch 1, **dadurch gekennzeichnet, dass** das Führungsmittel einen Durchgang (201; 201') umfasst, der das Verbindungsmittel über mindestens etwa die gesamte Breite des Fassadenblocks führt.

3. Fassadenblock nach Anspruch 1 oder 2, **dadurch gekennzeichnet, dass** die Verbinder der elektrischen Verbindungseinheit auf der einen und der anderen Seite des Führungsmittels befestigt sind.

4. Fassadenblock nach einem der vorangehenden Ansprüche, **dadurch gekennzeichnet, dass** das Verbindungskabel Versorgungs- und Übertragungsleiter von Informationssignalen umfasst.

5. Fassadenblock nach einem der vorangehenden Ansprüche, **dadurch gekennzeichnet, dass** die elektrische Verbindungseinheit mit der elektrischen Ausrüstung über ein Ausrüstungskabel (108; 108') verbunden ist.

6. Fassadenblock nach einem der vorangehenden Ansprüche, **dadurch gekennzeichnet, dass** er ein Kommunikations- und/oder Versorgungsgehäuse der Verbindungseinheit umfasst, wobei das Gehäuse ein Schnittstellenmittel mit dem elektrischen Kabel der Verbindungseinheit umfasst.

7. Fassadenblock nach vorangehendem Anspruch, **dadurch gekennzeichnet, dass** das Gehäuse einen drahtlosen Befehlsempfänger, insbesondere einen Empfänger von Funkbefehlen, umfasst.

8. Fassadenblock nach Anspruch 6 oder 7, **dadurch gekennzeichnet, dass** das Gehäuse einen Versorgungsblock umfasst, der ein Verbindungsmittel mit einem Versorgungsnetz umfasst.

9. Fassadenblock nach einem der Ansprüche 6 bis 8, **dadurch gekennzeichnet, dass** er für das Gehäuse eine Aufnahme in dem Rahmen umfasst.

10. Fassadenblock nach einem der vorangehenden Ansprüche, **dadurch gekennzeichnet, dass** er einen Steuerpunkt (131; 131', 133') umfasst, der in den Rahmen integriert und mit der elektrischen Ausrüstung verbunden ist.

11. Fassadenblock nach einem der vorangehenden Ansprüche, **dadurch gekennzeichnet, dass** er an jedem Ende des elektrischen Kabels umfasst:
- einen Verbinder (109, 109', 11) erster Bauart, der eine Verbindung zwischen Verbindungseinheiten benachbarter Fassadenblöcke und eine Verbindung zwischen dem elektrischen Kabel (107; 107') und dem Ausrüstungskabel (108; 108') erlaubt, oder
- einen Verbinder (110) zweiter Bauart, der nur eine Verbindung zwischen Verbindungseinheiten benachbarter Fassadenblöcke erlaubt.

12. Installation (300), die mehrere Fassadenblöcke (BF1-BF5) nach einem der vorangehenden Ansprüche umfasst, die in einem Gebäude mit mehreren Stockwerken installiert sind, **dadurch gekennzeichnet, dass** sie eine digitale Busverbindung umfasst, die von der Montage der Verbindungseinheiten verschiedener Fassadenblöcke nach einem der vorangehenden Ansprüche gebildet wird, die in einem selben Stockwerk installiert sind, und eine Verbindung gemäß einem TCP/IP-Protokoll zwischen den Fassadenblockgruppen, die in verschiedenen Etagen installiert sind.

13. Installationsverfahren von zwei Fassadenblöcken nach einem der Ansprüche 1 bis 11, **dadurch gekennzeichnet, dass** es die folgenden Schritte umfasst:
- Verbinden der Verbindungseinheit eines ersten Fassadenblocks mit einer externen Versorgungsquelle und einer Steuereinheit,
- Verbinden der Verbindungseinheit des ersten Fassadenblocks mit der Verbindungseinheit eines zweiten Fassadenblocks.

14. Installationsverfahren nach Anspruch 13, **dadurch gekennzeichnet, dass** es einen Schritt der vorherigen Einstellung der Fassadenblöcke im Werk umfasst.

15. Installationsverfahren nach Anspruch 13 oder 14, **dadurch gekennzeichnet, dass** es einen gemeinsamen Erkundungsschritt der Merkmale der elektrischen Ausrüstung eines Fassadenblocks und der Merkmale dieses Fassadenblocks umfasst.

## Claims

1. A fagade block (102; 102') comprising a frame (121; 121') for supporting a window (120; 120') in which the window and at least one piece of electrical equipment (130; 130', 132') are integrated, the electrical equipment being designed to be connected to a power cable, **characterized in that** it comprises an electrical connection unit (200; 200') comprising an electrical connecting cable (107; 107') having two ends (107a, 107b; 107a', 107b') and a connector (109, 110; 109', 111') at each end of the connecting cable and **in that** it comprises means (201; 201') for guiding the connecting cable along one edge of the frame.

2. The façade block according to claim 1, **characterized in that** the guide means comprise a passage (201; 201') guiding the connecting cable over at least substantially the entire width of the façade block.

3. The façade block according to claim 1 or 2, **characterized in that** the connectors of the electrical connection unit are fastened on either side of the guide means.

4. The façade block according to one of the preceding claims, **characterized in that** the connecting cable comprises power and information signal transmission conductors.

5. The façade block according to one of the preceding claims, **characterized in that** the electrical connection unit is connected to the electrical equipment by means of an equipment cable (108; 108').

6. The façade block according to one of the preceding claims, **characterized in that** it comprises a communication and/or power supply casing for the connection unit, said casing comprising interface means with the electrical cable of the connection unit.

7. The façade block according to the preceding claims, **characterized in that** the casing comprises a wireless order receiver, in particular a radio order receiver.

8. The façade block according to claim 6 or 7, **characterized in that** the casing comprises a power supply block comprising means for connecting to a power grid.

9. The façade block according to one of claims 6 to 8, **characterized in that** it comprises a housing in the frame for the casing.

10. The façade block according to one of the preceding claims, **characterized in that** it comprises a control point (131; 131', 133') integrated into the frame and connected to the electrical equipment.

11. The façade block according to one of the preceding claims, **characterized in that** it comprises, at each end of the electrical cable:
- a connector (109, 109', 11') of a first type allowing a connection between the connection units of adjacent façade blocks and a connection between the electrical cable (107; 107') and the equipment cable (108; 108'), or
- a connector (110) of a second type allowing a connection between adjacent façade block connection units only.

12. A facility (300) comprising several façade blocks (BF1-BF5) according to one of the preceding claims, installed in a building with several floors, **characterized in that** it comprises a connection by digital bus formed by the assembly of the connection units of different façade blocks according to one of the preceding claims, installed on the same floor, and a connection using the TCP/IP protocol between the sets of façade blocks installed on different floors.

13. A method for installing two façade blocks according to one of claims 1 to 11, **characterized in that** it comprises the following steps:
- connecting the connection unit of a first façade block to an external power source and a control unit,
- connecting the connection unit of the first façade block to the connection unit of a second façade block.

14. The installation method according to claim 13, **characterized in that** it comprises a step for prior adjustment of the façade blocks in the plant.

15. The installation method according to claim 13 or 14, **characterized in that** it comprises a step for mutual identification of the characteristics of the electrical equipment of the façade block and of the characteristics of the façade block.
